# EUROPEAN PATENT APPLICATION

(11) **EP 3 932 214 A1**
(43) Date of publication of application: **05.01.2022**
(21) Application number: 21182137.6
(22) Date of filing: 28.06.2021
(51) Int. Cl.: A23N 12/02, G07C 11/00, F16P 3/08

(54) **MACHINE FOR PROCESSING FRUIT AND VEGETABLE PRODUCTS**

(30) Priority: 29.06.2020 IT 202000015640
(71) Applicant: Orogel Societa'Cooperativa Agricola, 47522 Cesena (Forli'Cesena) (IT)
(72) Inventor: PIRINI, Andrea, 47035 GAMBETTOLA (FORLI' CESENA) (IT)
(74) Representative: Casadei, Barbara

(57) **Abstract**

A machine for processing fruit and vegetable products, in particular for washing fruit and/or vegetable products, which comprises a frame (2) for supporting at least one operating element (3), configured to pass from an operating position to a non-operating position, and vice versa, and a control unit (4) configured to control the passage of the operating element (3) from the operating position to the non-operating position; the supporting frame (2) has at least one inner compartment (5), in which the operating element (3) is at least partially housed, at least one access opening (6) to the compartment (5) and a first door (7) configured to pass from a closed position of the opening (6) to an open position;
the machine (1) comprises a second grid-shaped door (8), accessible in the open position of the first door (7), configured to pass from a first position for covering the opening (6) to a second position for access to the opening (6) and a sensor (9) configured to detect whether the second door (8) passes from the first position to the second position; if the second door (8) passes from the first position to the second position, the sensor (9) is configured to send a detection signal (10) to the control unit (4) which, after receiving the detection signal (10), is configured to send a control signal (15) to the operating element (3) to command the passage from the operating position to the non-operating position.

## Description

This invention relates to a machine for processing fruit and/or vegetable products.

More specifically, the machine according to the invention is designed for washing fruit and vegetable products.

Prior art machines designed for washing fruit and vegetable products are described and illustrated in patent documents KR20190023639 and US5113881.

As is known to the Applicant, the machine designed for washing fruit and vegetable products comprises a frame for supporting at least one operating element, in the form of a motor-driven conveyor belt.

The frame comprises a compartment for containing water for washing fruit and vegetable products and at least part of the conveyor belt.

In fact, the fruit and vegetable products are picked up by the conveyor belt from the tank and conveyed towards successive product processing stations.

In order to allow inspection and maintenance of the compartment for containing the washing water and of the conveyor belt, which may be subject to malfunctions due to the presence of fruit and vegetable products in the washing water, the frame has at least one opening giving access to the compartment.

A door with a hermetic seal allows the opening to be kept closed to prevent the escape of water and products and allows access, when it is opened, to the compartment for inspection and/or maintenance purposes.

Since the size of the opening of the compartment is such as to allow access to parts of the body of an operator, such as, for example, hands and arms, and/or tools designed for inspection/maintenance operations, the need has been felt to increase the safety of the machine to prevent possible accidents in situ, since the conveyor belt is present and may be in use in the compartment for washing the products.

In this context, a machine is made for processing fruit and vegetable products, in particular for washing fruit and/or vegetable products, which comprises a frame for supporting at least one operating element, configured to pass from an operating position to a non-operating position, and vice versa, and a control unit configured to control the passage of the operating element from the operating position to the non-operating position.

The supporting frame has at least one inner compartment, for housing at least part of the operating element, at least one opening for access to the compartment and a first door configured to pass from a closed position of the opening to an open position.

The machine comprises a second grid-shaped door, accessible in the open position of the first door, configured to pass from a first position for covering the opening to a second position for access to the opening and a sensor configured to detect whether the second door passes from the first position to the second position.

If the second door passes from the first position to the second position, the sensor is configured to send a detection signal to the control unit which, after receiving the detection signal, is configured to send a control signal to the operating element to command the passage from the operating position to the non-operating position.

Advantageously, the second grid-shaped door limits the access to the inner compartment of the frame by foreign bodies, allowing inspection to be performed without inhibiting operation of the operating element and guaranteeing a suitable safety distance between the operator and the operating element.

A further advantage is the presence of the sensor for detecting the position of the second door, since when the latter is opened, allowing access to the compartment through the opening, the operating element is forcedly disabled from operation by the control unit of the machine.

In this way, the operator who must necessarily perform inspection/maintenance operations inside the compartment can operate under safe conditions as the operating element is switched off automatically by the control unit.

Further features and advantages of this invention are more apparent in the detailed description below, with reference to a preferred, non-limiting, embodiment of a machine for processing fruit and vegetable products as illustrated in the accompanying drawings, in which:

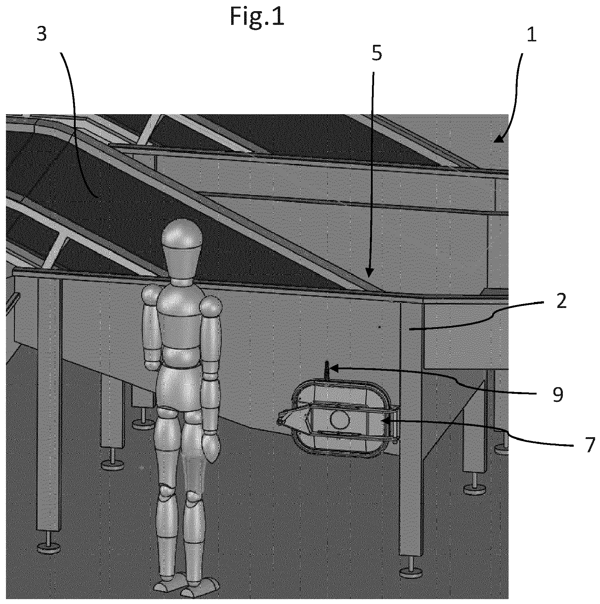

- Figure 1 is a schematic view of a machine for processing fruit and vegetable products according to the invention with some parts cut away to better illustrate others;

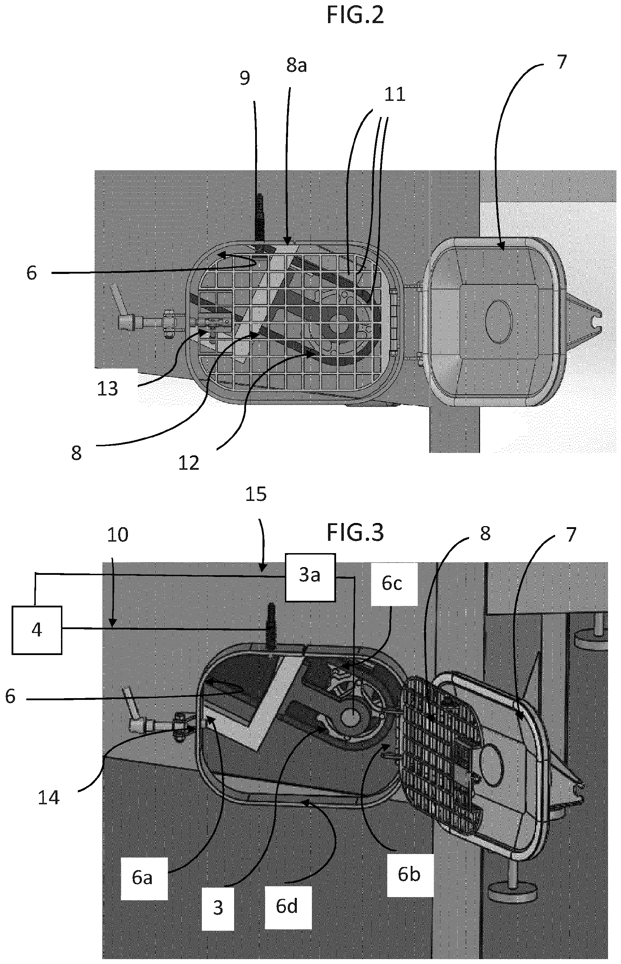

- Figure 2 is a front view of a part of the machine of Figure 1 in which a first door is open and a second grid-shaped door is closed;
- Figure 3 is a front view of a part of the machine of Figure 1 in which a first door is open and a second grid-shaped door is open.

The numeral 1 denotes a machine for processing fruit and/or vegetable products, in particular for washing fruit and vegetable products.

The machine 1 comprises a frame 2 for supporting at least one operating element 3, configured to pass from an operating position to a non-operating position, and vice versa.

The operating element 3 according to the embodiment illustrated is a motor-driven conveyor belt, the drive unit of which is labelled 3a.

A control unit 4 is configured for controlling the passage of the operating element 3 at least from the operating position to the non-operating position, and vice versa.

More specifically, the control unit 4 is configured for controlling the drive unit 3a of the operating element.

The supporting frame 2 comprises at least one inner compartment 5 for housing at least part of the operating element 3.

The compartment 5 inside the frame 2 is configured to contain at least partly water.

With reference to the operating element 3, it has at least part of the conveyor belt immersed in the water for conveying the fruit and vegetable products to successive processing stations.

The supporting frame 2 has at least one access opening 6 for the compartment 5.

The opening 6 is a through opening.

The opening 6 has a first side 6a and a second side 6b, opposite to the first side 6a.

The opening 6 has a top wall 6c and a bottom wall 6d which joins the first side 6a to the second side 6d.

The machine 1 comprises a first door 7 configured to pass from a closed position of the opening 6 to an open position.

Preferably, the first door 7 is of the sealed type to prevent the escape of fruit and vegetable products and/or water contained in the compartment 5. The machine 1 comprises a second grid-shaped door 8, accessible in the open position of the first door 7, configured to pass from a first position for covering the opening to a second position for access to the opening 6. The grid-shaped structure of the second door 8 has a plurality of bars 11 positioned relative to each other in such a way as to form through meshes 12.

According to the preferred embodiment, the bars 11 are positioned partly along a vertical direction and partly along a horizontal direction, in such a way as to form meshes 12 with a quadrangular shape.

Each mesh 12 has a size such as to prevent the introduction of foreign bodies inside the opening 6 of the compartment 5, such as, for example, a hand of an operator.

The second door 8 is located at a distance from the operating element 3 to prevent accidental contact with it, in particular by a length greater than 5 cm, that is to say, a length greater than a finger of a hand.

For example, even if the mesh 12 allowed the passage of a finger of an operator through the opening 5, it would not be able to come into contact with the operating element 3.

The second door 8 comprises an element 13 for locking the frame 2 which can engage in a corresponding housing 14.

The housing 14 is positioned at the first side 6a of the opening 6.

The locking element 3 is configured to be inserted manually inside the respective housing 14.

The second door 8 is hinged along a second side 6b of the opening 6, opposite the first side.

The first door 7 is hinged to the frame 2 at the second side 6b of the opening 6.

A sensor 9 is configured to detect whether the second door 8 passes from the first position to the second position.

If the second door 8 passes from the first position to the second position, the sensor 9 is configured to send a detection signal 10 to the control unit 4 which, after receiving the detection signal 10, is configured to send a control signal 15 to the operating element 3 to command the passage from the operating position to the non-operating position.

The sensor 9 is configured to detect at least one perimeter portion 8a of the second door 8.

The sensor 9 is positioned at the top wall 6c of the opening 6 in such a way as to prevent any contact with the water which escapes from the opening 6.

Advantageously, the presence of the second grill-shaped door 8 increases the safety of the machine 1, since it limits access to the inside of the compartment 5 and establishes a physical limit between the operator and the operating element 3.

Moreover, another advantage is the automatic switching off of the operating element 3, thus avoiding cases in which the operator accesses the opening 6, forgetting to switch off the operating element 3.

## Claims

**1.** A machine for processing fruit and vegetable products, in particular for washing fruit and/or vegetable products, comprising a frame (2) for supporting at least one operating element (3), configured to pass from an operating position to a non-operating position, and vice versa, and a control unit (4) configured to control the passage of the operating element (3) at least from the operating position to the non-operating position; the supporting frame (2) has at least one inner compartment (5), at least one access opening (6) of the compartment (5) and a first door (7) configured to pass from a closed position of the opening (6) to an open position;
the machine is **characterised in that** it comprises a second grid-shaped door (8), accessible in the open position of the first door (7), configured to pass from a first position for covering the opening (6) to a second position for access to the opening (6) and a sensor (9) configured to detect whether the second door (8) passes from the first position to the second position; if the second door (8) passes from the first position to the second position, the sensor (9) is configured to send a detection signal (10) to the control unit (4) which, after receiving the detection signal (10), is configured to send a control signal (15) to the operating element (3) to command the passage from the operating position to the non-operating position.

**1.** The machine according to claim 1, **characterised in that** the grid-shaped structure of the second door (8) has a plurality of bars (11) positioned relative to each other in such a way as to form through meshes (12); each mesh (12) has a size such as to prevent the introduction of foreign bodies inside the opening (6) of the compartment (5).

**2.** The machine according to any one of the preceding claims, **characterised in that** the sensor (9) is configured to detect at least one perimeter portion (8a) of the second door (8); the sensor (9) is positioned at a top wall (6c) of the opening (6).

**3.** The machine according to any one of the preceding claims, **characterised in that** the compartment (5) inside the frame (2) is configured to contain at least partly water.

**4.** The machine according to any one of the preceding claims, **characterised in that** the second door (8) comprises an element (13) for locking to the frame (2) which can engage in a corresponding housing seat (14) positioned at a first side (6a) of the opening (6).

**5.** The machine according to claim 5, **characterised in that** the second door (8) is hinged along a second side (6b) of the opening (6), opposite the first side (6a).

**6.** The machine according to any one of the preceding claims, **characterised in that** the second door (8) is positioned at a distance from the operating element (3) greater than a predetermined length, in particular a length greater than 5 cm.
